(19) Europäisches Patentamt
European Patent Office
Office européen des brevets

(11) Veröffentlichungsnummer: **0 047 863**
**A2**

(12) # EUROPÄISCHE PATENTANMELDUNG

(21) Anmeldenummer: **81106311.4**

(22) Anmeldetag: **13.08.81**

(51) Int. Cl.³: **C 09 B 62/016**
D 06 P 3/66, D 06 P 3/10

(30) Priorität: **26.08.80 DE 3032129**

(43) Veröffentlichungstag der Anmeldung:
**24.03.82 Patentblatt 82/12**

(84) Benannte Vertragsstaaten:
**CH DE FR GB LI**

(71) Anmelder: **BAYER AG**
**Zentralbereich Patente, Marken und Lizenzen**
**D-5090 Leverkusen 1, Bayerwerk(DE)**

(72) Erfinder: **Schreiner, Kurt, Dr.**
**Thüringer Strasse 87**
**D-6444 Hönebach(DE)**

(72) Erfinder: **Jäger, Horst, Dr.**
**Carl-Rumpff-Strasse 37**
**D-5090 Leverkusen(DE)**

(54) **Phthalocyanin-Reaktivfarbstoffe, Verfahren zu ihrer Herstellung und ihre Verwendung zum Färben von hydroxylgruppen- und/oder stickstoffhaltigen Materialien.**

(57) Die vorliegende Erfindung betrifft neue Phthalocyanin-Reaktivfarbstoffe, die in Form der freien Säure der Formel

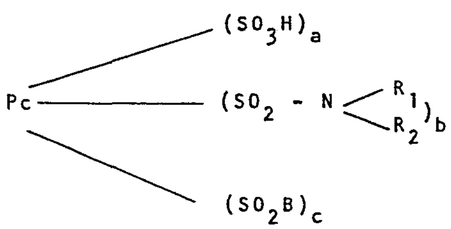

1

entsprechen, wobei
Pc, $R_1$, $R_2$, B sowie a, b, und c die im Anmeldungstext angegebene Bedeutung besitzen. Die Erfindung betrifft weiterhin Verfahren zu ihrer Herstellung und ihre Verwendung zum Färben von hydroxylgruppen- und/oder stickstoffhaltigen Materialien.

EP 0 047 863 A2

Croydon Printing Company Ltd.

0047863

BAYER AKTIENGESELLSCHAFT
Zentralbereich
Patente, Marken und Lizenzen

5090 Leverkusen, Bayerwerk
Er/mo

Phthalocyanin-Reaktivfarbstoffe, Verfahren zu ihrer Herstellung und ihre Verwendung zum Färben von hydroxylgruppen- und/oder stickstoffhaltigen Materialien.

Gegenstand der vorliegenden Erfindung sind Phthalocyanin-Reaktivfarbstoffe, die in Form der freien Säure der Formel I entsprechen

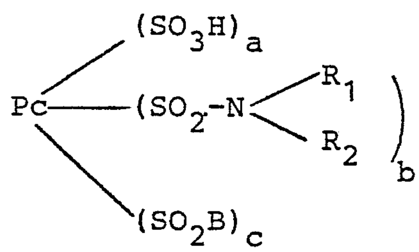

I

worin

Pc = Rest eines Phthalocyanins,

$R_1$ und $R_2$ gleich oder verschieden sein können und für Wasserstoff, gegebenenfalls substituiertes Alkyl, gegebenenfalls substituiertes Cycloalkyl, gegebenenfalls substituiertes Aralkyl oder gegebenenfalls substituiertes Aryl stehen können

oder worin

$R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest bilden,

worin

a = Zahl von 0 bis 3,

b = Zahl von 0 bis 3,

c = Zahl von 1 bis 4,

wobei (a + b + c) $\leqslant$ 4,

B = Rest der Formeln II und/oder III

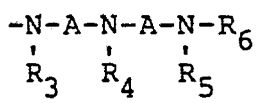

II

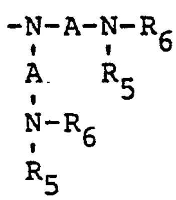

III

worin die Reste A gleich oder verschieden sein können und für gegebenenfalls substituiertes geradkettiges Alkylen mit mindestens 2 C-Atomen, für gegebenenfalls substituiertes verzweigtes Alkylen mit mindestens 3 C-Atomen oder für gegebenenfalls substituiertes Cycloalkylen mit mindestens 5 C-Atomen stehen, und worin

$R_3$ = Wasserstoff, gegebenenfalls substituiertes Alkyl, gegebenenfalls substituiertes Aralkyl,

$R_4$ = gegebenenfalls substituiertes Alkyl, gegebenenfalls substituiertes Aralkyl oder Z, wobei Z für den Rest einer Reaktivgruppe steht, oder Q, wobei Q für den Rest der Formel

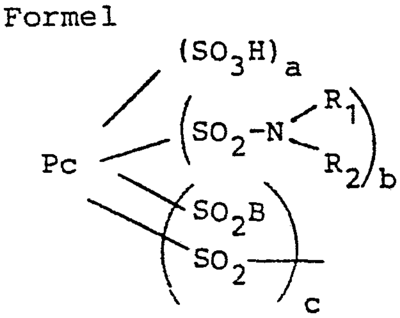

steht, in der Pc,a,b,c,$R_1$,$R_2$ und B die angegebene Bedeutung haben,

$R_5$ = Wasserstoff, gegebenenfalls substituiertes Alkyl, gegebenenfalls substituiertes Aralkyl oder Z, wobei Z die angegebene Bedeutung hat, oder Q, wobei Q die angegebene Bedeutung hat

$R_6$ = Wasserstoff, gegebenenfalls substituiertes Alkyl, gegebenenfalls substituiertes Aralkyl

oder worin

$R_3$ und $R_4$ oder $R_4$ und $R_6$ jeweils zusammen einen gegebenenfalls substituierten Alkylenrest mit mindestens 2 C-Atomen bilden, wobei die Reaktivfarbstoffe der Formel I

a) mindestens einen Rest Z enthalten und

b) die Gruppierung $-\underset{R_5}{\underset{|}{N}}-R_6$

in Formel III nicht für $-NH_2$ oder für $-N{<}^{H}_{(Alkyl)}$ stehen darf.

Der Phthalocyaninrest kann metallfrei sein, er ist jedoch vorzugsweise metallhaltig. Als Metalle kommen Kobalt, Nickel und Kupfer in Betracht.

In den Farbstoffen der Formel (I) ist jede Sulfonsäure- bzw. Sulfonamidgruppe an einen anderen Benzolring des Phthalocyanins in 3- oder 4-Stellung gebunden.

Für die Formeln I, II, III gilt das im folgenden Aufgeführte.

Gegebenenfalls substituiertes Alkyl $R_1$, $R_2$ steht vorzugsweise für gegebenenfalls durch OH, COOH, $SO_3H$ substituiertes Alkyl ($C_1$-$C_6$). Beispiele: Methyl, Ethyl, Propyl, Butyl, Amyl, ß-Hydroxyethyl, γ-Hydroxypropyl, Pentahydroxyhexyl, Carboxymethyl, ß-Carboxyethyl, ß-Sulfoethyl, ß-Sulfatoethyl.

Gegebenenfalls substituiertes Cycloalkyl $R_1$, $R_2$ steht vorzugsweise für gegebenenfalls durch OH, COOH, $SO_3H$ substituiertes Cycloalkyl ($C_3$-$C_7$). Beispiele: Cyclohexyl, 2-Hydroxycyclohexyl, 4-Sulfocyclohexyl.
Gegebenenfalls substituiertes Aralkyl $R_1$, $R_2$ steht vorzugsweise für gegebenenfalls durch OH, COOH, $SO_3H$ im Arylteil substituiertes Aralkyl, dessen Arylteil vorzugsweise 6 oder 10 Kohlenstoffatome aufweist und dessen Alkylteil vorzugsweise 1 bis 6 C-Atome enthält. Beispiele: Benzyl, Phenylethyl, Carboxybenzyl, Sulfobenzyl.

Gegebenenfalls substituiertes Aryl $R_1$, $R_2$ steht vorzugsweise für gegebenenfalls durch OH, COOH, $SO_3H$, Halogen (insbesondere Chlor) substituiertes Phenyl oder Naphthyl. Beispiele: Phenyl, Naphthyl, Chlorphenyl, Methoxyphenyl, Sulfophenyl, Carboxyphenyl.

Bilden $R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest, so kommen vorzugsweise folgende Gruppierungen in Betracht:

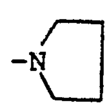 , 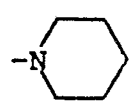 , 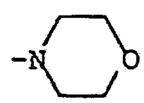 , 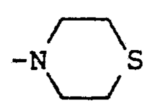 ,

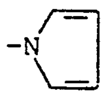 , 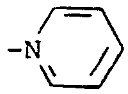 ,

Gegebenenfalls substituiertes geradkettiges Alkylen A mit mindestens 2 C-Atomen, steht vorzugsweise für gegebenenfalls durch OH, $SO_3H$, COOH substituiertes geradkettiges Alkylen ($C_2$-$C_{10}$).

Gegebenenfalls substituiertes verzweigtes Alkylen A steht vorzugsweise für gegebenenfalls durch OH, $SO_3H$, COOH substituiertes verzweigtes Alkylen ($C_3$-$C_{10}$).

Gegebenenfalls substituiertes Cycloalkylen mit mindestens 5-C-Atomen steht vorzugsweise für gegebenenfalls durch OH, $SO_3H$, COOH substituiertes Cycloalkylen ($C_5$-$C_7$).
Beispiele für Alkylenreste A sind:

$-(CH_2)_i-$ (wobei i = 2-8), $-CH_2-\overset{CH_3}{CH}-$, $-CH_2-\overset{CH_3}{CH}-CH_2-$,

$-CH_2-\underset{CH_3}{\overset{CH_3}{C}}-CH_2-$

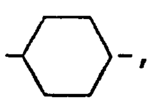, 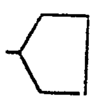 , 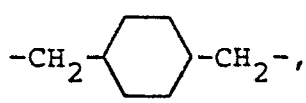, $-CH_2-\overset{COOH}{CH}-$ ,

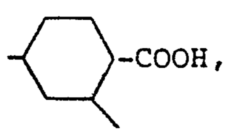, 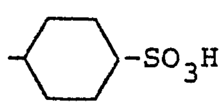

Gegebenenfalls substituiertes Alkyl $R_3$, $R_4$, $R_5$, $R_6$ steht vorzugsweise für gegebenenfalls durch COOH, $SO_3H$, OH substituiertes Alkyl ($C_1$-$C_8$), Beispiele: ß-Carboxyethyl, ß-Sulfoethyl, ß-Sulfobutyl, γ-Sulfobutyl, Methyl, Ethyl, Propyl, Isopropyl, Butyl, Carboxymethyl, α-Carboxyethyl, α-Carboxypropyl, α-Carboxybutyl, Sulfomethyl.

Gegebenenfalls substituiertes Aralkyl $R_3$, $R_4$, $R_5$, $R_6$ steht vorzugsweise für gegebenenfalls durch OH, $SO_3H$, COOH substituiertes Phenylalkyl ($C_1$-$C_4$) oder Naphthylalkyl ($C_1$-$C_4$). Beispiele: Benzyl, Phenylethyl, Naphthylmethyl, Naphthylethyl, Carboxybenzyl, Sulfobenzyl.

Falls $R_3$ und $R_4$ oder $R_4$ und $R_6$ jeweils zusammen für einen gegebenenfalls substituierten Alkylenrest mit mindestens 2 C-Atomen stehen, so stehen sie vorzugsweise für gegebenenfalls durch OH, COOH, $SO_3H$ substituiertes Alkylen ($C_2$-$C_8$). Beispiele: $-CH_2-\underset{\displaystyle CH_3}{CH}-$,

$\overset{\displaystyle COOH}{CH_2-CH}-$ und insbesondere $-CH_2-CH_2-$.

Unter Reaktivgruppen Z werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit der NH-Gruppe dieser Fasern unter Ausbildung kovalenter Bindungen zu reagieren vermögen. Derartige faserreaktive Gruppierungen sind aus der Literatur in großer Zahl bekannt.

Erfindungsgemäß geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridin-Ringsystem. Die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschließlich Hydrazinium, Sulfonium, Sulfonyl, Azido ($N_3$), Rhodanido, Thio, Thioether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entspre=chenden Schwefelsäurehalbester, 2-Diethylamino-4-chlor=triazinyl-6-, 2-Morpholino- oder 2-Piperidino-4-chlortri=azinyl-6-, 2-Cyclohexylamino-4-chlortriazinyl-6-, 2-Aryl=amino- und substituiertes Arylamino-4-chlortriazinyl-6-, wie 2-Phenylamino-4-chlortriazinyl-6-, 2-(o-, m- oder p-Carboxy- oder Sulfophenyl)amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlor=triazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlortriazinyl-6-, 2-Alkylmercapto- oder 2-Arylmercapto- oder 2-(substitu=iertes Aryl)-mercapto-4-chlortriazinyl-6-, wie 2-β-Hydroxyethyl-mercapto-4-chlortriazinyl-6-, 2-Phenylmer=capto-4-chlortriazinyl-6-, 2-(4'-Methylphenyl)-mercapto-4-chlortriazinyl-6-, 2-(2',4'-Dinitro)-phenylmercapto-4-chlortriazinyl-6-, 2-Methyl-4-chlortriazinyl-6-, 2-Phenyl-4-chlortriazinyl-6-, und die entsprechenden fluorsubstituierten Reste z. B. 2,4-Difluortriazinyl-6-, 2-Amino-4-fluortriazinyl-6-, 2-Alkylamino-4-fluortriazi=nyl-6-, wie 2-Methylamino-4-fluortriazinyl-6-, 2-Ethyl=amino- oder 2-Propylamino-4-fluortriazinyl-6-, 2-β-Ox=ethylamino-4-fluortriazinyl-6-, 2-Di-β-oxethylamino-4-fluortriazinyl-6-, und die entsprechenden Schwefelsäure=halbester, 2-Diethylamino-4-fluortriazinyl-6-, 2-Morpho=lino- oder 2-Piperidiono-4-fluortriazinyl-6-, 2-Cyclo=hexylamino-4-fluortriazinyl-6-, 2-Arylamino- und substi=tuiertes Arylamino-4-fluortriazinyl-6-, wie 2-Phenylamino-4-fluortriazinyl-6-, 2-(o-, m- oder p-Carboxy- oder Sulfophenyl)-amino-4-fluortriazinyl-6-, 2-Alkoxy-4-fluor=

triazinyl-6-, wie 2-Methoxy- oder Ethoxy-4-fluortriazinyl-6-, 2-(Phenylsulfonylmethoxy)-4-fluortriazinyl-6-, 2-Aryloxy und substituiertes Aryloxy-4-fluortriazinyl-6-, wie 2-Phenoxy-4-fluortriazinyl-6-, 2-(p-Sulfophenyl)-oxy-4-fluortriazinyl-6-, 2-(o-, m- oder p-Methyl- oder Methoxyphenyl)-oxy-4-fluortriazinyl-6-, 2-Alkylmercapto- oder 2-Arylmercapto- oder 2-(substituiertes Aryl)-mercapto-4-fluortriazinyl-6-, wie 2-β-Hydroxyethyl-mer=capto-4-fluortriazinyl-6-, 2-Phenylmercapto-4-fluortri=azinyl-6-, 2-(4'-Methylphenyl)-mercapto-4-fluortriazinyl-6-, 2-(2',4'-Dinitro)-phenylmercapto-4-fluortriazinyl-6-, 2-Methyl-4-fluortriazinyl-6-, 2-Phenyl-4-fluortriazinyl-6-, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Tri=chlorpyrimidin-5-carbonyl-, 2,4-Dichlorpyrimidin-5-sulfonyl-, 2-Chlorchinoxalin-3-carbonyl-, 2- oder 3-Mono=chlorchinoxalin-6-carbonyl-, 2- oder 3-Monochlorchinox=alin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder carbonyl-, 2- oder 3- oder 4-(4',5'-Dichlorpyridazon-6'-yl-1')-phenylsulfonyl- oder carbonyl-, β-(4',5'-Dichlorpyridazon-6'-yl-1')-ethylcarbonyl-, N-Methyl-N-(2,4-dichlortriazinyl-6-(-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-

oder N-Ethyl-N-(2,4-dichlortriazinyl-6-)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidi=nyl-, 2,5,6-Trifluor-4-pyrimidinyl-, 5-Chlor-6-chlor=methyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluor=methyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methylsulfonyl -4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimi=dinyl-, 2-Fluor-6-carbonamido-4-pyrimidinyl-, 2-Fluor-6-carbomethoxy-4-pyrimidinyl-, 2-Fluor-6-phenyl-4-pyrimi=dinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidi=nyl-, 2,6-Difluor-5-trifluormethyl-4-pyrimidinyl; sulfo=nylgruppenhaltige Triazinreste, wie 2,4-Bis-(phenylsulfo=

nyl)-triazinyl-6-, 2-(3'-Carboxyphenyl)-sulfonyl-4-chlortriazinyl-6-, 2-(3'-Sulfophenyl)-sulfonyl-4-chlor=triazinyl-6-, 2,4-Bis-(3'-carboxyphenylsulfonyl- )-tri=azinyl-6-; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimi=dinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methyl=sulfonyl-pyrimidin-5-sulfonyl-, 2-Methylsulfonyl-pyrimi=dinyl-4-, 2-Phenylsulfonyl-pyrimidinyl-4-, 2-Trichlor-methylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlor=methyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethyl=sulfonyl-5-chlor-6-methyl-pyrimidinyl-4-, 2-Methylsulfo=nyl-6-chlor-pyrimidinyl-4-, 2,6-Bis-methylsulfonyl-5-chlor-pyrimidinyl-4-, 2-Methylsulfonyl-6-carboxy-pyrimi=dinyl-4-, 2-Methylsulfonyl-5-sulfo-pyrimidinyl-4-, 2-Methylsulfonyl-6-carbomethoxy-pyrimidinyl-4-, 2-Methyl=sulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidi=nyl-4-, 2-Methylsulfonyl-5-brom-pyrimidinyl-4-, 2-Phenyl=sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfo=nyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl=

pyrimidin-5-sulfonyl- oder -carbonyl-; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Ethoxy- oder Aroxy-, wie Phenoxy- oder Sulfophenoxy-Gruppen substituiert sind; 2-Chlorbenzthiazol-5- oder 6-carbonyl- oder -5- oder -6-sulfonyl-, 2-Arylsulfonyl- oder -Alkylsulfonylbenzthiazol-5-l oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl-oder -4- oder -5-sulfonyl-, N-Oxid des 4-Chlor- oder 4-Nitrochinolin-5-carbonyls.

Des weiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, ß-Chlorpropionyl-, 3-Phensulfonylpropionyl-, 3-Methylsulfonylpropionyl-, ß-Sulfato-ethylaminosulfonyl-, Vinylsulfonyl-, ß-Chlorethylsulfonyl-, ß-Sulfatoethylsulfonyl-, ß-Methylsulfonylethylsulfonyl-, ß-Phenylsulfonethylsulfonyl-, 2-Fluor-2-chlor-3,3-difluorcyclobutan-1-carbonyl-, 2,2,3,3,-Tetrafluorcyclobutan-carbonyl-1- oder sulfonyl-1-, ß-(2,2,3,3-Tetrafluorcyclobutyl-1)-acryloyl-, α- oder ß-Bromacryloyl-, α- oder ß-Alkyl- oder Arylsulfonylacryloyl-Gruppe, wie α- oder ß-Methylsulfonylacryloyl.

Als weitere geeignete Reaktivgruppen sind diejenigen der allgemeinen Formel

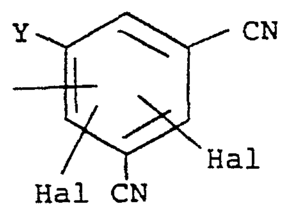

IIIa

zu nennen, worin

Hal unabhängig voneinander jeweils ein Halogenatom bedeutet, welches die restlichen Stellungen 2, 4 und 6 des Benzolkerns besetzt, und

Y für H oder einen elektronenanziehenden Substituenten steht,

Hal jeweils Cl oder insbesondere F bedeutet und

Y einen elektronenanziehenden Substituenten darstellt, insbesondere F, Cl oder CN.

Entsprechende Reaktivreste der letztgenannten Formel werden in der DE-OS 29 16 715 aufgeführt.

Ebenfalls geeignete Reaktivgruppen entsprechen der allgemeinen Formel

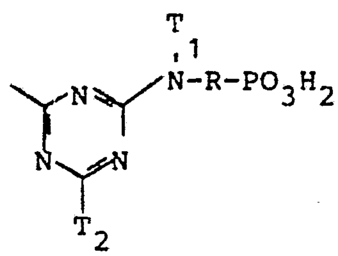

IIIb

worin

$T_2$ für F, Cl, Br, OH, einen Niederalkoxyrest mit 1 bis 4 C-Atomen, $NH_2$, eine quaternäre Ammoniumgruppe oder den Rest eines primären oder sekundären Amins, welches, sofern es aromatisch ist, z.B. durch $SO_3H$ oder COOH substituiert sein kann, steht,

$T_1$ für H oder einen Alkyl- oder substituierten Alkylrest mit bis zu 4 Kohlenstoffatomen steht,

R für einen Kohlenwasserstoff- oder substituierten Kohlenwasserstoffrest steht.

Beispiele für Kohlenwasserstoff- und substituierte Kohlenwasserstoffreste R sind gesättigte aliphatische Reste, wie z.B. Alkylenreste mit 1 bis 6 Kohlenstoffatomen, die substituiert sein können, beispielsweise durch OH, Phenyl und Benzyl; cycloaliphatische und aromatische Reste, wie z.B. Cyclohexylen und Phenylen, die substituiert sein können, beispielsweise durch F, Cl, Br, Alkyl, Alkoxy, $SO_3H$, $CO_2H$, $CF_3$ und $NO_2$; Naphthylenreste, die substituiert sein können, beispielsweise durch $SO_3H$ und $PO_3H_2$; und araliphatische Reste, wie z.B. $-C_6H_4.CH_2-$.

Beispiele für Alkyl- und substituierte Alkylreste $T_1$ sind $C_1$-$C_4$-Alkylreste, wie z.B. n-Butyl, n-Propyl, Ethyl und Methyl; Hydroxyalkylreste, wie z.B. ß-Hydroxyethyl, ß-Hydroxypropyl, ß-Sulfatoethyl, $-CH_2-CH_2-PO_3H_2$ und ß-Cyanoethyl; und Alkoxyalkylreste, wie z.B. Methoxypropyl, Ethoxyethyl und ß-Methoxyethyl.

Beispiele für Aminreste $T_2$ sind Methylamino, Ethylamino, n-Propylamino, Dimethylamino, Diethylamino, ß-Hydroxyethyl-amino, Di-(ß-hydroxyethyl)amino, Piperidino, Morpholino, ß-Methoxyethylamino, Carboxymethylamino, ß-Sulfoethylamino, N-Methyl-ß-sulfoethylamino, ß-Phosphonoethylamino, o-, m- und p-Sulfoanilino, N-Methyl-o-, -m- und -p-sulfoanilino, 2,4-, 2,5- und 3,5-Disulfoanilino, o-, m- und p-Carboxyanilino, und 5-Sulfo-2-carboxyanilino, 4- und 5-Sulfo-2-methyl-anilino, 4- und 5-Sulfo-2-methoxyanilino, 4- und 5-Sulfo-2-chloroanilino, 2-, 5- und 8-Sulfo-1-naphthylamino, 1-, 4- und 3-Sulfo-2-naphthylamino, 1,5-, 4,8-, 5,7- und 6,8-Disulfo-2-naphthylamino sowie 3,8- und 4,8-Disulfo-1-naphthylamino.

Entsprechende Reaktivreste der letztgenannten Formel werden in der DE-OS 2 616 683 aufgeführt.

Bevorzugte Farbstoffe entsprechen den Formel IV und VI

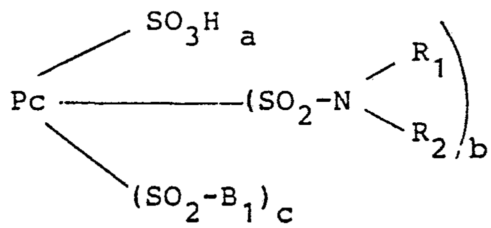

IV

worin Pc, $R_1$, $R_2$, a, b und c die angegebene Bedeutung haben und $B_1$ für die Reste der Formeln Va und/oder Vb steht

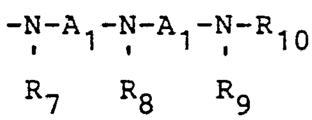

Va

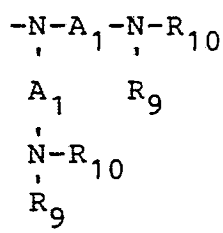

Vb

worin $A_1$ = $-CH_2-CH_2-$, $-CH_2-CH_2-CH_2-$

$R_7$ = H, Carboxymethyl

$R_8$ = Carboxymethyl, Z

wobei Z die angegebene Bedeutung hat

$R_9$ und $R_{10}$=H, Carboxymethyl,

$R_9$ = darüber hinaus Z
wobei Z die angegebene Bedeutung hat, der Rest
$-N-R_{10}$
$R_9$
in den Formeln Va und Vb nicht $-N-H$ oder
$H$
$-N-CH_2-COOH$ sein darf und mindestens einer der
$H$
Reste $R_8$ oder $R_9$ für Z steht,

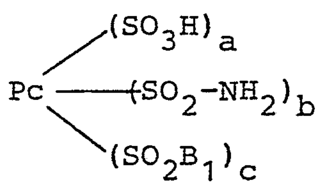

VI

worin Pc, a, b, c und $B_1$ die angegebene Bedeutung haben. Besonders bevorzugt sind Farbstoffe der Formel VII

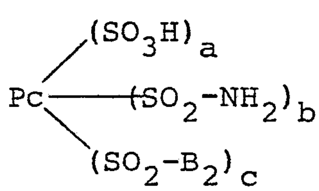

VII

worin Pc, a, b und c die angegebene Bedeutung haben und $B_2$ für den Rest der Formeln VIIIa und/oder VIIIb steht

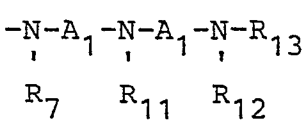

VIIIa

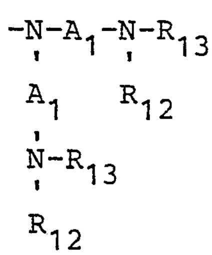

VIIIb

worin $A_1$ und $R_7$ die angegebene Bedeutung haben

$R_{11}$, $R_{12}$, = $Z_1$ wobei

$Z_1$ = Rest eines Mono- oder Dihalogen-triazins,

$R_{12}$, $R_{13}$ = Carboxymethyl, H

$R_{11}$ = darüber hinaus auch Carboxymethyl wobei

$-\underset{R_{12}}{N}H-R_{13}$ nicht $-\underset{H}{N}-H$ oder $-\underset{H}{N}-CH_2-COOH$ sein darf und

mindestens einer der Reste $R_{11}$ oder $R_{12}$ für $Z_1$ steht.

Beispiele für $Z_1$ sind der 2,4-Dichlor-triazinyl-6-, 2-Amino-4-chlortriazinyl-6-, 2-Alkylamino-4-chlortriazi=nyl-6-, wie 2-Methylamino-4-chlortriazinyl-6, 2-Ethylami=no oder 2-Propylamino-4-chlortriazinyl-6-, 2-β-Oxethyl=amino-4-chlortriazinyl-6-, 2-Di-β-oxethylamino-4-chlor=triazinyl-6- und die entsprechenden Schwefelsäurehalb=ester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Aryl=amino-4-chlortriazinyl-6-, wie 2-Phenylamino-4-chlortri=azinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenyl=sulfonylmethoxy)-4-chlortriazinyl-6-, 2-Aryloxy und substituiertes Aryloxy -4-chlortriazinyl-6-, wie 2-Phen=oxy-4-chlortriazinyl-6-, 2-(p-Sulfophenyl)-oxy-4-chlor=triazinyl-6-, 2-(o-, m- oder p-Methyl- oder Methoxyphenyl)-oxy-4-chlor-triazinyl-6-, 2-Alkylmercapto- oder 2-Aryl=mercapto- oder 2-(substituiertes Aryl)-mercapto-4-chlor=triazinyl-6-, wie 2-β-Hydroxyethyl-mercapto-4-chlortriazi=nyl-6-, 2-Phenylmercapto-4-chlortriazinyl-6-, 2-(4'-Methylphenyl)-mercapto-4-chlortriazinyl-6-, 2-(2',4'-Di=nitro)-phenylmercapto-4-chlortriazinyl-6-, 2-Methyl-4-

chlor-triazinyl-6-, 2-Phenyl-4-chlortriazinyl-6-, 2,4-Di=fluortriazinyl-6-, 2-Amino-4-fluortriazinyl-6-, 2-Alkyl=amino-4-fluortriazinyl-6-, wie 2-Methylamino-4-fluortri=azinyl-6-, 2-Ethylamino- oder 2-Propylamino-4-fluortriazi=nyl-6-, 2-β-Oxethylamino-4-fluortriazinyl-6-, 2-Di-β-ox=ethylamino-4-fluortriazinyl-6- und die entsprechenden Schwefelsäurehalbester, 2-Diethylamino-4-fluortriazinyl-6-, 2-Morpholino- oder 2-Piperidino-4-fluortriazinyl-6-, 2-Cyclohexylamino-4-fluortriazinyl-6-, 2-Arylamino- und sub=stituiertes Arylamino-4-fluortriazinyl-6-, wie 2-Phenyl=amino-4-fluortriazinyl-6-, 2-(o-, m- oder p-Carboxy- oder Sulfophenyl)-amino-4-fluortriazinyl-6-, 2-Alkoxy-4-fluor=triazinyl-6-, wie 2-Methoxy oder Ethoxy-4-fluortriazinyl-6-, 2-(Phenylsulfonylmethoxy)-4-fluortriazinyl-6-, 2-Aryloxy und substituiertes Aryloxy-4-fluortriazinyl-6-, wie 2-Phenoxy-4-fluortriazinyl-6-, 2-(p-Sulfophenyl)-oxy-4-fluortriazinyl-6-, 2-(o-, m- oder p-Methyl- oder Meth=oxyphenyl)-oxy-4-fluortriazinyl-6-, 2-Alkylmercapto- oder 2-Arylmercapto- oder 2-(substituiertes Aryl)-mercapto-4-fluortriazinyl-6-, wie 2-β-Hydroxyethyl-mercapto-4-fluor=triazinyl-6-, 2-Phenylmercapto-4-fluortriazinyl-6-, 2-(4'-Methylphenyl)-mercapto-4-fluortriazinyl-6-, 2-(2',4'-Di=nitro)-phenylmercapto-4-fluortriazinyl-6-, 2-Methyl-4-fluortriazinyl-6-, 2-Phenyl-4-fluortriazinyl-6-rest.

Die Herstellung von Verbindungen der Formel I erfolgt bei=spielsweise durch Acylierung von Verbindungen der Formel IX

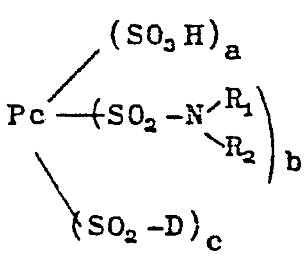

IX

worin Pc, a, b, c, $R_1$ und $R_2$ die angegebene Bedeutung haben und D für die Reste der Formeln

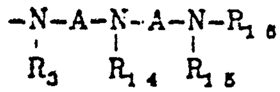 und/oder 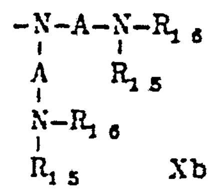

Xa Xb

steht, worin

$R_3$ und A die angegebene Bedeutung haben und

$R_{14}$, $R_{15}$, $R_{16}$ = unabhängig voneinander Wasserstoff, gegebenenfalls substituierter Alkyl- oder Aralkylrest der, vorzugsweise durch eine wasserlöslichmachende Gruppe substituiert ist, oder $R_3$ und $R_{14}$ bzw. $R_{14}$ und $R_{15}$ bilden einen Alkylenrest mit mindestens 2 C-Atomen, wobei mindestens einer der Reste $R_{14}$, $R_{15}$ und $R_{16}$ Wasserstoff ist, mit bis zu 2 c Mol eines Acylierungsmittels der Formel XI

$$L — Z \qquad XI$$

worin Z die angegebene Bedeutung hat und L eine anionisch abspaltbare Gruppe darstellt.

Hierfür geeignete Reaktivkomponenten der Formel XI sind beispielsweise solche, die den vorgenannten Reaktivgruppen zugrunde liegen, das heißt im allgemeinen die Halogenide, insbesondere die Chloride der genannten Acylkomponenten Z. Aus der großen Zahl der zur Verfügung stehenden Verbindungen seien hier auszugsweise erwähnt:

Trihalogen-symmetrische-triazine, wie Cyanurchlorid und Cyanurfluorid, Dihalogen-monoamino- und monosubstituierteamino-symmetrische Triazine, wie 2,6-Dichlor-4-amino-

triazin, 2,6-Dichlor-4-methylaminotriazin, 2,6-Dichlor-4-ethylaminotriazin, 2,6-Dichlor-4-oxethylaminotriazin, 2,6-Dichlor-4-phenylamino-triazin, 2,6-Dichlor-4-(o-, m- oder p-sulfophenyl)-aminotriazin, 2,6-Dichlor-4-(2',3'-, 2',4'-, 3',4'- oder 3',5'-disulfophenyl)-aminotriazin, 2,6-Dichlor-4-(2'-methyl-4'-sulfophenyl)-aminotriazin, 2,6-Dichlor-(2'-chlor-4'-sulfophenyl)-aminotriazin, 2,6-Dichlor-(2'-methyl-5'-sulfophenyl)-aminotriazin, 2,6-Dichlor-(2'-methoxy-5'-sulfophenyl)-aminotriazin, 2,6-Dichlor-(2',5'-disulfo-4'-methoxyphenyl)-aminotriazin, 2,6-Dichlor-(4',8'-disulfonaphthyl-(2'))-aminotriazin, Dichlor-alkoxy und -aryloxy-sym.triazine, wie 2,6-Dichlor-4-methoxytriazin, 2.6-Dichlor-4-ethoxytriazin, 2,6-Dichlor-4-phenoxytriazin, 2,6-Dichlor-4-(o-, m- oder p-sulfo=phenyl)-oxytriazin, Dichlor-alkylmercapto- und -arylmer=capto-sym.-triazine, wie 2,6-Dichlor-4-ethylmercapto-triazin, 2,6-Dichlor-4-phenylmercapto-triazin, 2,6-Dichlor-4-(p-methylphenyl)-mercaptotriazin, 2,6-Dichlor-4-methoxy=ethoxytriazin, 2,6-Difluor-4-aminotriazin, 2,6-Difluor-4-methylaminotriazin, 2,6-Difluor-4-ethylaminotriazin, 2,6-Difluor-4-ß-oxethylaminotriazin, 2,6-Difluor-4-phenylamino-triazin, 2,6-Difluor-4-(o-, m- oder p-sulfophenyl)-amino=triazin, 2,6-Difluor-4-(2'3'-, -2',4'-, -3',4'- oder -3',5'-disulfophenyl)-aminotriazin, 2,6-Difluor-4-(2'-methyl-4'-sulfophenyl)-aminotriazin, 2,6-Difluor-(2'-chlor-4'-sulfophenyl)-aminotriazin, 2,6-Difluor-(2'-methyl-5'-sulfophenyl)-aminotriazin, 2,6-Difluor-(2'-methoxy-5'-sulfophenyl)-aminotriazin, 2,6-Difluor-(2',5'-disulfo-4'-methoxyphenyl)-aminotriazin, 2,6-Difluor-(4',8'-disulfo=naphthyl-(2'))-aminotriazin, Difluor-alkoxy und -aryloxy-sym.-triazine, wie 2,6-Difluor-4-methoxytriazin, 2,6-Di=fluor-4-ethoxytriazin, 2,6-Difluor-4-phenoxytriazin, 2,6-Difluor-4-(o-, m- oder p-sulfophenyl)-oxytriazin, Difluoralkylmercapto und -arylmercapto-sym.-triazine, wie 2,6-Difluor-4-ethylmercapto-triazin, 2,6-Difluor-4-phenyl=mercaptotriazin, 2,6-Difluor-4-(p-methylphenyl)-mercapto=triazin, 2,6-Difluor-4-methoxyethoxytriazin.

Tetrahalogen-pyrimidine, wie Tetrachlor-, Tetrabrom- oder Tetrafluor-pyrimidin, 2,4,6-Trihalogenpyrimidine, wie 2,4,6-Trichlor-, -Tribrom- oder -Trifluor-pyrimidin, Dihalogenpyrimidine, wie 2,4-Dichlor-, -Dibrom- oder -Difluorpyrimidine; 2,4,6-Trichlor-5-nitro- oder -5-methyl- oder -5-carbomethoxy- oder -5-carboethoxy- oder -5-carboxymethyl- oder -5-mono-, -di- oder -trichlormethyl- oder -5-carboxy- oder -5-sulfo- oder -5-cyano- oder -5-vinylpyrimidin, 2,4-Difluor-6-methylpyrimidin, 2,6-Di=fluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Di=fluor-2,5-dichlor- oder -dibrompyrimidin, 2,6-Difluor-4-brompyrimidin, 2,4,6-Trifluor-5-brompyrimidin, 2,4,6-Tri=fluor-5-chlormethylpyrimidin, 2,4,6-Trifluor-5-nitropyrimi=din, 2,4,6-Trifluor-5-cyanpyrimidin, 2,4,6-Trifluorpyrimi=din-5-carbonsäurealkylester oder -5-carbonsäureamide, 2,6-Difluor-5-methyl-4-chlorpyrimidin, 2,6-Difluor-5-chlor=pyrimidin, 2,4,6-Trifluor-5-methylpyrimidin, 2,4,5-Tri=fluor-6-methylpyrimidin, 2,4-Difluor-5-nitro-6-chlor=pyrimidin, 2,4-Difluor-5-cyanpyrimidin, 2,4-Difluor-5-methylpyrimidin, 6-Trifluormethyl-5-chlor-2,4-difluor=pyrimidin, 6-Phenyl-2,4-difluorpyrimidin, 6-Trifluor=methyl-2,4-difluorpyrimidin, 5-Trifluormethyl-2,4,6-tri=fluorpyrimidin, 2,4-Difluor-5-nitro-pyrimidin, 2,4-Di=fluor-5-trifluormethylpyrimidin, 2,4-Difluor-5-methyl=sulfonyl-pyrimidin, 2,4-Difluor-5-phenyl-pyrimidin. 2,4-Difluor-5-carbonamido-pyrimidin, 2,4-Difluor-5-carbometh=oxy-pyrimidin, 2,4-Difluor-6-trifluormethyl-pyrimidin, 2,4-Difluor-5-brom-6-trifluormethyl-pyrimidin, 2,4-Di=fluor-6-carbonamido-pyrimidin, 2,4-Difluor-6-carbometh=oxy-pyrimidin, 2,4-Difluor-6-phenyl-pyrimidin, 2,4-Di=fluor-6-cyanpyrimidin, 2,4,6-Trifluor-5-methyl-sulfonyl-pyrimidin, 2,4-Difluor-5-sulfonamido-pyrimidin, 2,4-Di=fluor-5-chlor-6-carbomethoxy-pyrimidin, 5-Trifluormethyl-2,4-difluorpyrimidin, 2,4-Dichlorpyrimidin-5-carbonsäure=chlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlor=pyrimidin-4-carbonsäurechlorid; Pyrimidin-Reaktivkompo=nenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimi=din, 2,4,6-Trismethylsulfonylpyrimidin, 2,6-Bis-methyl=sulfonyl-4,5-dichlorpyrimidin, 2,4-Bis-methylsulfonyl=pyrimidin-5-sulfonsäurechlorid, 2-Methylsulfonyl-4-chlor=pyrimidin, 2-Phenylsulfonyl-4-chlorpyrimidin, 2,4-Bis-trichlormethylsulfonyl-6-methylpyrimidin, 2,4-Bis-methyl=sulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlor=methylpyrimidin, 2-Methylsulfonyl-4-chlor-6-methylpyrimi=din-5-sulfonsäurechlorid, 2-Methylsulfonyl-4-chlor-5-nitro-6-methylpyrimidin, 2,4,5,6-Tetramethylsulfonylpyrimidin, 2-Methylsulfonyl-4-chlor-5,6-dimethylpyrimidin, 2-Ethylsulfonyl-4,5-dichlor-6-methylpyrimidin, 2-Methyl=sulfonyl-4,6-dichlorpyrimidin, 2,4,6-Tris-methylsulfonyl-5-chlorpyrimidin, 2-Methylsulfonyl-4-chlor-6-carboxy=pyrimidin, 2-Methylsulfonyl-4-chlorpyrimidin-5-sulfon=

säure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-6-methoxypyrimidin, 2-Methylsulfonyl-4,5-dichlorpyrimidin, 4,6-Bis-methylsulf=onylpyrimidin, 4-Methylsulfonyl-6-chlorpyrimidin, 2-Sulfoethylsulfonyl-4-chlor-6-methylpyrimidin, 2-Methyl=sulfonyl-4-chlor-5-brompyrimidin, 2-Methylsulfonyl-4-chlor-5-brom-6-methylpyrimidin, 2,4-Bis-methylsulfonyl-5-chlorpyrimidin, 2-Phenylsulfonyl-4,5-dichlorpyrimidin, 2-Phenylsulfonyl-4,5-dichlor-6-methylpyrimidin, 2-Carb=oxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-Bis-(2'- oder 3'- oder 4'-carboxy=phenylsulfonyl)-5-chlor-6-methylpyrimidin, 2-Methylsulf=onyl-6-chlorpyrimidin-4- oder -5-carbonsäurechlorid, 2-Ethylsulfonyl-6-chlorpyrimidin-4- oder -5-carbonsäure=chlorid, 2,6-Bis-(methylsulfonyl)-pyrimidin-4-carbon=säurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlo=rid; weitere Reaktivkomponenten der heterocyclischen Reihe mit reaktiven Sulfonylsubstituenten sind beispiels=weise 3,6-Bis-phenylsulfonyl-pyridazin, 3-Methylsulfonyl-6-chlorpyridazin, 3,6-Bis-trichlormethylsulfonylpyridazin, 3,6-Bis-methylsulfonyl-4-methylpyridazin, 2,5,6-Trismethylsulfonylpyrazin, 2,4-Bis-methylsulfonyl-1,3,5-triazin, 2,4-Bis-methylsulfonyl-6-(3'-sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Tris-phenylsulfonyl-1,3,5-triazin, 2,4-Bis-methylsulfonylchinazolin, 2,4-Bis-trichlormethyl=sulfonylchinolin, 2,4-Bis-carboxymethylsulfonylchinolin,

2,6-Bis-(methylsulfonyl)-pyridin-4-carbonsäurechlorid und 1-(4'-Chlorcarbonylphenyl oder 2'-chlorcarbonylethyl)-4,5-bis-methylsulfonyl-pyridazon-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfon=säurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4',5'-Dichlorpyridazon-6'-yl-1')-phenylsulfon=säurechlorid oder -carbonsäurechlorid sowie die entspre=chenden Bromverbindungen, β-(4',5'-Dichlorpyridazon-6'-yl-1')-ethylcarbonsäurechlorid, 2-Chlorchinoxalin-3-carbonsäurechlorid und die entsprechenden Bromverbindungen, N-Methyl-N-(2,4-dichlortriazinyl-6)-carbamidsäurechlorid, N-Methyl-N-(2-chlor-4-methylamino-triazinyl-6)-carbamid=säurechlorid, N-Methyl-N-(2-chlor-4-dimethylamino-triazi=nyl-6)-carbamidsäurechlorid, N-Methyl- oder N-Ethyl-N-(2,4-dichlortriazinyl-6)-aminoacetylchlorid, N-Methyl-, N-Ethyl- oder N-Hydroxyethyl-N-(2,3-dichlorchinoxalin-6-sulfonyl- oder -6-carbonyl)-aminoacetylchlorid und die entsprechenden Bromderivate, ferner 2-Chlorbenzthiazol-5- oder -6-carbonsäurechlorid oder -5- oder -6-sulfonsäure=chlorid und die entsprechenden Bromverbindungen, 2-Aryl=sulfonyl- oder 2-Alkylsulfonyl-benzthiazol-5- oder -6-carbonsäurechlorid oder -5- oder -6-sulfonsäurechlorid, wie 2-Methylsulfonyl- oder 2-Ethylsulfonyl- oder 2-Phenyl=

sulfonyl-benzthiazol-5- oder 6-sulfonsäurechlorid oder -5- oder -6-carbonsäurechlorid sowie die entsprechenden im ankondensierten Benzolring Sulfonsäuregruppen enthal= tenden 2-Sulfonylbenzthiazol-Derivate, 3,5-Bis-methyl= sulfonyl-isothiazol-4-carbonsäurechlorid, 2-Chlor-benz= oxazol-5- oder -6-carbonsäurechlorid oder -sulfonsäure= chlorid sowie die entsprechenden Bromderivate, 2-Chlor= benzimidazol-5- oder -6-carbonsäurechlorid oder sulfon= säurechlorid sowie die entsprechenden Bromderivate, 2-Chlor-1-methylbenzimidazol-5- oder -6-carbonsäurechlorid oder -sulfonsäurechlorid sowie die entsprechenden Brom= derivate, 2-Chlor-4-methylthiazol-(1,3)-5-carbonsäure= chlorid oder -4- oder -5-sulfonsäurechlorid, 2-Chlorthia= zol-4- oder -5-sulfonsäurechlorid und die entsprechenden Bromderivate.

Weitere zur Herstellung der erfindungsgemäßen Verbindungen einsetzbare Reaktivkomponenten sind diejenigen der Formel

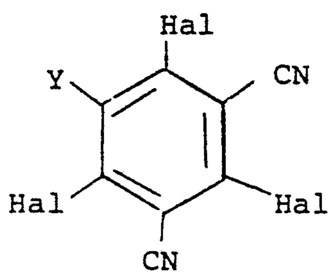

XIIa

in welcher

Hal unabhängig voneinander jeweils ein Halogenatom bedeutet und Y für einen elektronenanziehenden Substituenten steht, wobei insbesondere

Hal für Chlor oder Fluor steht und Y vorzugsweise für Fluor, Chlor oder CN steht.

Angaben hierzu finden sich in der DE-OS 29 167 15.

Ebenfalls geeignete Reaktivkomponenten entsprechen der Formel

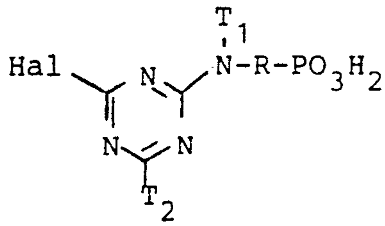

XII b

worin Hal für F, Cl, Br steht und $T_1$, $T_2$ und R die bei Formel IIIb angegebene Bedeutung haben, Reaktivkomponenten dieser Formel sind in der DE-OS 2 616 683 beschrieben.

Aus der Reihe der aliphatischen Reaktivkomponenten sind beispielsweise zu erwähnen:

Acrylsäurechlorid, Mono-, Di- oder Trichlor-acrylsäure=chlorid, 3-Chlorpropionsäurechlorid, 3-Phenylsulfonyl=propionsäurechlorid, 3-Methylsulfonyl-propionsäurechlorid, 3-Ethyl-sulfonylpropionsäurechlorid, 2-Chlorethansulfo=chlorid, Chlormethansulfochlorid, 2-Chloracetylchlorid, 2,2,3,3-Tetrafluorcyclobutan-1-carbonsäurechlorid, β-(2,2,3,3-Tetrafluorcyclobutyl-1)-acrylsäurechlorid, 2,2,3-Trifluor-2-chlorcyclobutan-1)-carbonsäurechlorid, β-Methylsulfonyl-acrylsäurechlorid, α-Methylsulfonyl-acrylsäurechlorid und α-Bromacrylsäurechlorid und β-Brom=acrylsäurechlorid.

Verbindungen der Formel I, die als faserreaktiven Rest Z einen Monohalogen-sym.-triazin-Rest tragen, lassen sich auch dadurch herstellen, daß man in den entsprechenden Farbstoffen, die an Stelle des Monohalogen-sym.-triazin-Restes einen Dihalogen-sym.-triazin-Rest tragen, in an sich bekannter Weise ein Halogen des Dihalogen-sym.-triazin-Restes XII durch Kondensation mit einer Verbindung H-E (XIIc) gegen den Rest austauscht.

E steht in Formel XIIc für einen Substituenten, insbesondere für $OR_{17}$, $SR_{17}$ oder $NR_{18}R_{19}$, wobei $R_{17}$ einen gegebe=

nenfalls substituierten Alkyl-, Aryl- oder Heteroarylrest bedeutet, $R_{18}$ steht für Wasserstoff oder einen gegebenenfalls substituierten Alkylrest und $R_{19}$ für Wasserstoff oder einen gegebenenfalls substituierten Alkyl- oder Arylrest oder $R_{18}$ und $R_{19}$ bilden gegebenenfalls unter Einschluß eines Heteroatoms einen Ring.

Beispiele für gegebenenfalls substituierte Alkylreste $R_{17}$ sind: Methyl, Ethyl, Propyl, Isopropyl, t-Butyl, Methoxymethyl, Methoxyethyl, Ethoxyethyl. Beispiele für gegebenenfalls substituierte Arylreste $R_{17}$ sind: Phenyl, 4-Chlorphenyl oder 4-Methoxyphenyl. Geeignete Alkylreste $R_{18}$ sind folgende: Methyl, Ethyl, Propyl, Isopropyl, n-Butyl, Cyclohexyl, Oxethyl, Methoxyethyl, Carboxymethyl, ß-Carboxyethyl, ß-Sulfoethyl. Geeignete Alkylreste $R_{19}$ sind folgende: Methyl, Ethyl, Propyl, Isopropyl, Oxethyl, Methoxyethyl. Geeignete Arylreste $R_{19}$ sind folgende: Phenyl, o-, m-, p-Chlorphenyl, o-, m-, p-Methoxyphenyl, o-, m-, p-Methylphenyl, o-, m-, p-Sulfophenyl, 2-Methyl-4 oder 5-sulfophenyl, 2-Chlor-4 oder 5-sulfophenyl, 2-Methoxy-4 oder 5-sulfophenyl, 2,5-Disulfophenyl, 3,5-Disulfophenyl, 2,5-Disulfo-4-methoxyphenyl, 2-Carboxyphenyl, 2-Carboxy-4 oder 3-sulfophenyl, 2-Sulfo-4-methylphenyl. Geeignete Ringsysteme der Formel $-NR_{18}R_{19}$ sind die Reste des Pyrrolidins, Piperidins oder Morpholins.

Der Austausch eines Chlor- bzw. Fluor-Atoms in Dihalogen-sym.-triazin-Farbstoffen der Formel I gegen den Rest E stellt eine Kondensation dar.

Man führt diese Kondensation nach an sich bekannten Methoden durch, zweckmäßig in Gegenwart säurebindender

Mittel, wie Natriumacetat, Natriumhydroxid oder -carbonat und unter solchen Bedingungen, daß im fertigen Produkt noch ein austauschbares Chlor- bzw. Fluoratom übrigbleibt, das heißt, z.B. in Gegenwart von organischen Lösungsmitteln oder bei relativ tiefen bis mäßig erhöhten Temperaturen in wäßrigem Medium. Bei dieser Herstellungsweise kommen hierbei als Reaktionspartner die folgenden Mercapto-, Hydroxyl- und Aminoverbindungen der Formel $XII_c$ in Betracht:

Aliphatische oder aromatische Mercapto- oder Hydroxylverbindungen, wie Thioalkohole, Thioglykolsäure, Thioharnstoff, Thiophenole, Mercaptobenzthiazole, Methyl-, Ethyl-, Isopropylalkohol, Glykolsäure, Phenol, Chlor- oder Nitrophenole, Phenolcarbon- und -sulfonsäuren, Naphthole, Naphtolsulfonsäuren, insbesondere aber Ammoniak und acylierbare Aminogruppen enthaltende Verbindungen, wie Hydroxylamin, Hydrazin, Phenylhydrazin, Phenylhydrazinsulfonsäuren, Carbamidsäure und ihre Derivate, Semi- und Thiosemicarbazide und -carbazone, Methyl-, Ethyl-, Isopropyl-, Methoxyethyl-, Methoxypropylamin, Dimethyl-, Diethyl-, Methylphenyl-, Ethylphenylamin, Chlorethylamin, Ethanolamine, Propanolamine, Benzylamin, Cyclohexylamin, Morpholin, Piperidin, Piperazin, Aminokohlensäureester, Aminoessigsäureester, Aminoethansulfonsäure, N-Methylaminoethansulfonsäure, vor allem aber aromatische Amine, wie Anilin, N-Methylanilin, Toluidine, Xylidine, Chloraniline, p- bzw. m-Aminoacetanilid, Nitraniline, Aminophenole, Nitrotoluidine, Phenylendiamine, Toluylendiamine, Anisidin, Phenetidin, Diphenylamin, Naphthylamin, Aminonaphthole, Diaminonaphthaline und insbesondere saure

Gruppen enthaltende Aniline, wie Sulfanil-, Metanil-, Orthanilsäure, Anilindisulfonsäure, Aminobenzoesäure, Naphthylaminmono -di- und trisulfonsäure, Aminobenzoe= säuren, wie 1-Oxy-5-aminobenzoesäure, Aminonaphtholmono-, -di- und -trisulfonsäuren.

Farbstoffe, die als Reaktivgruppe ein oder zwei Reste der Formel

$$\underset{\displaystyle T_1}{-\overset{}{N}}-R-PO_3H_2 \ ,$$

worin $T_1$ und R die angegebene Bedeutung haben, an ein sym. 2,4,6-Triazin gebunden enthalten, lassen sich auch dadurch herstellen, daß man in den entsprechenden Mono- oder Dihalogentriazin-Farbstoffen ein oder zwei Halogenatome durch Umsetzung mit einem Amin der Formel

$$H-\underset{\displaystyle T_1}{N}-R-PO_3H_2 \ ,$$

worin $T_1$ und R die angegebene Bedeutung haben, gegen den Rest der Formel

$$-\underset{\displaystyle T_1}{N}-R-PO_3H_2$$

austauscht. Amine der Formel

$$H\underset{\displaystyle T_1}{N}-R-PO_3H_2$$

und Reaktionsbedingungen sind in der DE-OS 2 616 683 beschrieben.

Phthalocyaninverbindungen der Formel IX lassen sich dadurch herstellen, daß in einem vorzugsweise wäßrigen Medium ein Phthalocyanin-sulfochlorid der Formel XIII

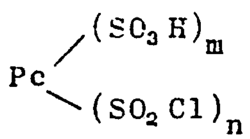

XIII

worin Pc die angegebene Bedeutung hat und m eine Zahl von 0 bis 3, n eine Zahl von 1 bis 4 darstellt und die Summe aus m und n höchstens 4 beträgt mit einem Triamin der

Formel XIV $\quad H—D \quad$ XIV

worin D die angegebene Bedeutung hat, gegebenenfalls in Anwesenheit weiterer Amine der Formel

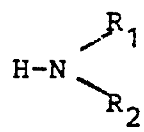

umsetzt.

Beispiele für Triamine der Formel XIV sind:

$H_2N-CH_2-CH_2-NH-CH_2-CH_2-NH_2$ ,

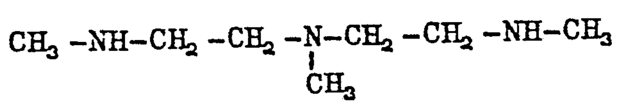

$H_2N-CH_2-CH_2-CH_2-NH-CH_2-CH_2-CH_2-NH_2$ ,

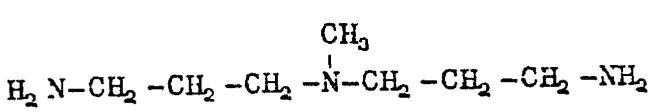

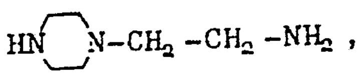 , 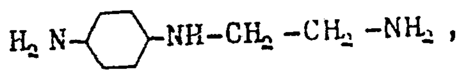

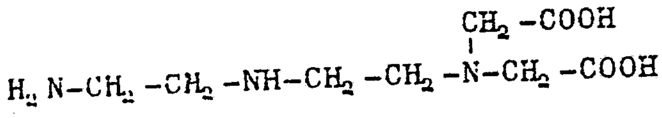

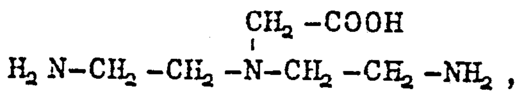

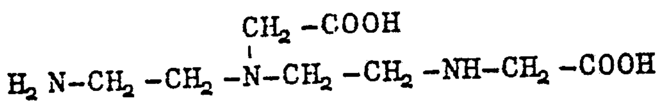

$H_2N-CH_2-CH_2-NH-CH_2-CH_2-NH-CH_2-COOH$

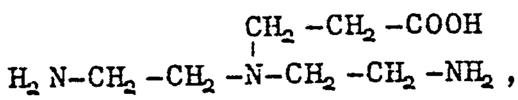

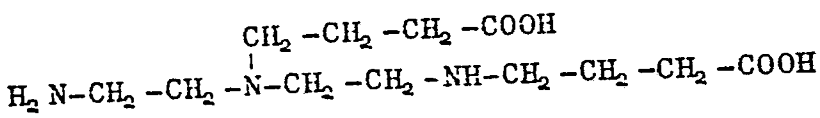

$H_2N-CH_2-CH_2-NH-CH_2-CH_2-NH-CH_2-CH_2-O-SO_3H$

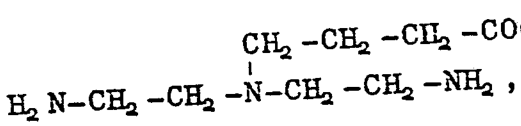 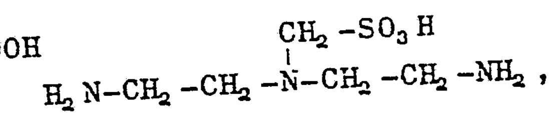

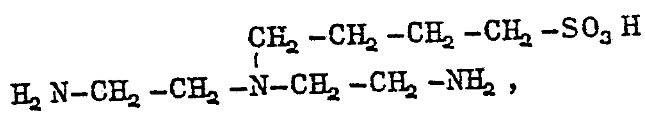

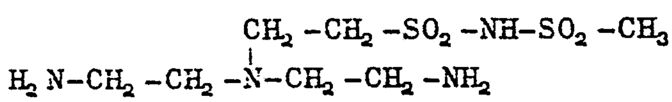

$$CH_2-COOH$$
$$CH_3-NH-CH_2-CH_2-N-CH_2-CH_2-NH-CH_2-COOH$$

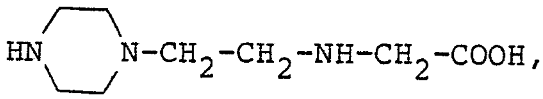

$$CH_2-COOH$$
$$H_2N-CH_2-CH_2-CH_2-N-CH_2-CH_2-CH_2-NH_2$$

$$CH_2-COOH$$
$$H_2N-CH_2-CH_2-CH_2-N-CH_2-CH_2-CH_2-NH-CH_2-COOH$$

$$CH_3$$
$$CH_2-CH-COOH$$
$$H_2N-CH_2-CH_2-CH_2-N-CH_2-CH_2-CH_2-NH_2$$

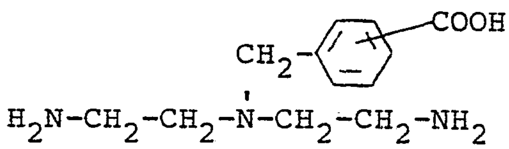

$$CH_2-CH_2-OSO_3H$$
$$H_2N-CH_2-CH_2-N-CH_2-CH_2-NH-CH_2-CH_2OSO_3H,$$

$$CH_2-CH_2-O-SO_3H$$
$$H_2N-CH_2-CH_2-N-CH_2-CH_2-NH_2$$

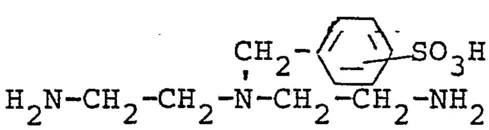

$$CH_3$$
$$H_2N-CH_2-CH_2-N-CH_2-CH_2-NH-CH_2-COOH$$

Die Triamine der Formel XIV können in reiner Form mit den Phthalocyanin-sulfochloriden der Formel XIII umgesetzt werden, ebensogut können aber auch Gemische dieser Triamine eingesetzt werden, die erhalten werden, wenn man Triamine der Formel XIV mit Alkylierungsmitteln der Formel XV

L —— G XV

worin L = anionisch abspaltbare Gruppe

G = gegebenenfalls substituierter Alkylrest, vorzugsweise durch eine wasserlöslichmachende Gruppe substituiert,

umsetzt.

Alkylierungsmittel der Formel XV sind z. B. Methyljodid, Ethyljodid, Benzylbromid, Dimethylsulfat, Ethylenoxid.

Bevorzugte Alkylierungsmittel der Formel XV sind z. B.: Chloressigsäure, Bromessigsäure, 2-Chlorpropionsäure, 2-Brompropionsäure, 3-Chlorpropionsäure, 3-Brompropionsäure, 2-Chlorbuttersäure, 2-Brombuttersäure, 3-Chlorbuttersäure, 3-Brombuttersäure, 4-Chlorbuttersäure, 4-Brombuttersäure, 2-Methyl-3-chlorpropionsäure, 2-Methyl-3-brompropionsäure, 2-Chlorethansulfonsäure, 2-Bromethansulfonsäure, 4-Chlorbutansulfonsäure und 4-Brombutansulfonsäure, o-, m- oder p-Carboxybenzylchlorid- oder -bromid, o-, m- oder p-Sulfobenzylchlorid- oder -bromid, Hydroxymethansulfonsäure, sowie Halogenalkyl-disulfimide der Formeln XVI und XVII

$Cl-CH_2-CH_2-SO_2-NH-SO_2-R_{20}$ XVI

$Cl-CH_2-CH_2-CH_2-CH_2-SO_2-NH-SO_2-R_{20}$ XVII

worin $R_{20}$ für Methyl, n-Butyl, Phenyl, Tolyl, p-Chlorphenyl steht.

Verbindungen der Formel IX mit $R_3$, $R_{14}$, $R_{15}$ oder $R_{16}$ = $-CH_2-CH_2-OSO_3H$ erhält man durch Alkylierung von XIV mit

Alkylenoxiden wie Ethylenoxid und anschließende Umwand= lung in den Schwefelsäurehalbester. Phthalocyaninverbindungen der Formel IX lassen sich auch dadurch herstellen, daß man Verbindungen der Formel IX mit Verbindungen der Formel XV alkyliert. Die Alkylierung der Verbindungen der Formeln IX bzw. XIV kann durchgeführt werden vorzugsweise in wäßrigem, oder aber in wäßrigorganischem Lösungsmittel, bei Temperaturen zwischen 0 und 140 °C, bevorzugt zwischen 20 und 100 °C, wobei man zweck= mäßigerweise die freiwerdende Säure durch Zusatz von Alkali wie z. B. Natriumbicarbonat, Soda, Natronlauge oder Natriumacetat neutralisiert bzw. abpuffert. Als orga= nische Lösungsmittel kommen vor allem Aceton, Chlorkohlen= wasserstoffe wie Ethylenchlorid oder Chlorbenzol oder auch aprotische polare Lösungsmittel wie Dimethylform= amid in Betracht.
Enthält das Phthalocyanin-sulfonchlorid der Formel XIII weniger Sulfosäuregruppen, als sie für die Verbindungen der Formeln I bzw. IX erwünscht sind, so werden diejenigen Sulfochloridgruppen, die mit dem Triamin nicht reagiert haben, zu Sulfosäuregruppen hydrolysiert.

Phthalocyaninsulfonsäurechloride der Formel XIII können dadurch erhalten werden, daß das entsprechende Phthalo= cyanin oder die Phthalocyaninsulfonsäure mit Chlorsulfon= säure behandelt wird, falls erforderlich in Gegenwart von Tetrachlorkohlenstoff oder einem Säurehalogenid wie Thionylchlorid, Sulfurylchlorid, Phosphorpentachlorid, Phosphoroxychlorid und Phosphortrichlorid, wie in den britischen Patentschriften 708 543, 784 834 und 785 629 und in der USA-Patentschrift 2 219 330 beschrieben. Bei den erfindungsgemäßen Farbstoffen kann es sich um ein=

heitliche Stoffe handeln, d. h. die Buchstaben a, b, c und d stehen für ganze Zahlen. Vorzugsweise fallen bei der Darstellung jedoch Gemische an, die durch nicht ganze Zahlen für a, b, c und d charakterisiert werden. Diese Zahlen stellen Mittelwerte dar. Bisweilen zeigen derar= tige Gemische bezüglich Löslichkeit und Substantivität besondere Vorteile. In solchen Mischungen variieren die Zahlen im gemittelten Wert.

Derartige erfindungsgemäße Gemische werden beispielsweise aus zwei oder mehreren, jeweils einheitlichen Endfarb= stoffen der Formel I oder besonders vorteilhaft durch Verwendung eines Gemisches der Ausgangskomponenten her= gestellt. Letzteres entsteht häufig zwangsläufig, da die Phthalocyaninsulfonsäurechlorid-sulfonsäuren bezüglich Sulfierungsgrad und ihres Verhältnisses vom Sulfonsäure= chlorid und Sulfonsäure Unterschiede aufweisen.

Die neuen Farbstoffe der Formel I eignen sich zum Färben und Bedrucken von Hydroxyl- oder Amidgruppen enthaltenden Materialien, wie Textilfasern-, Fäden und Geweben aus Wolle, Seide, synthetischen Polyamid-, und Polyurethan= fasern und zum waschechten Färben und Bedrucken von nativer oder regenerierter Cellulose, wobei die Behand= lung von Cellulosematerialien zweckmäßigerweise in Gegen= wart säurebindender Mittel und gegebenenfalls durch Hitzeeinwirkung nach den für Reaktivfarbstoffe bekannt= gewordenen Verfahren erfolgt.

Die angegebenen Formeln der Farbstoffe sind die der ent= sprechenden freien Säuren. Die Farbstoffe wurden im all= gemeinen in Form der Alkalisalze, insbesondere der Na-Salze isoliert und zum Färben eingesetzt.

Die in den Beispielen genannten Gewichtsmengen beziehen sich auf die freie Säure, die angegebenen Indexzahlen stellen Mittelwerte dar.

Beispiel 1

a) 106,5 g des Farbstoffes der Formel

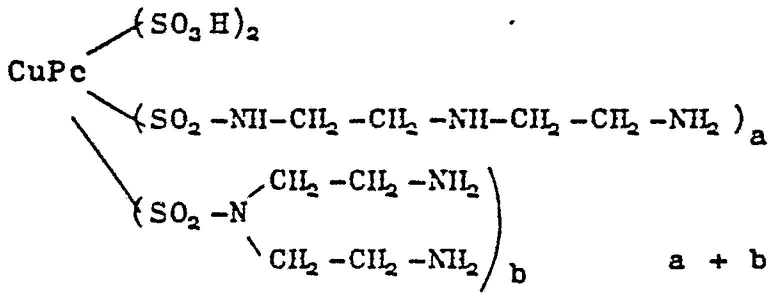

a + b = 2

der wie unten beschrieben hergestellt wurde, werden in 1,3 l Eiswasser aufgeschlämmt. Man stellt mit Natronlauge auf pH 7 und versetzt mit einer Lösung von 89,6 g 2,4-Dichlor-6-methoxyethoxy-1,3,5-triazin in wenig Aceton. Man erwärmt auf 35 °C und hält den pH-Wert bei 6,8 - 7 durch Zugabe von Sodalösung. Nach beendeter Acylierung salzt man aus und isoliert den Farbstoff der Formel

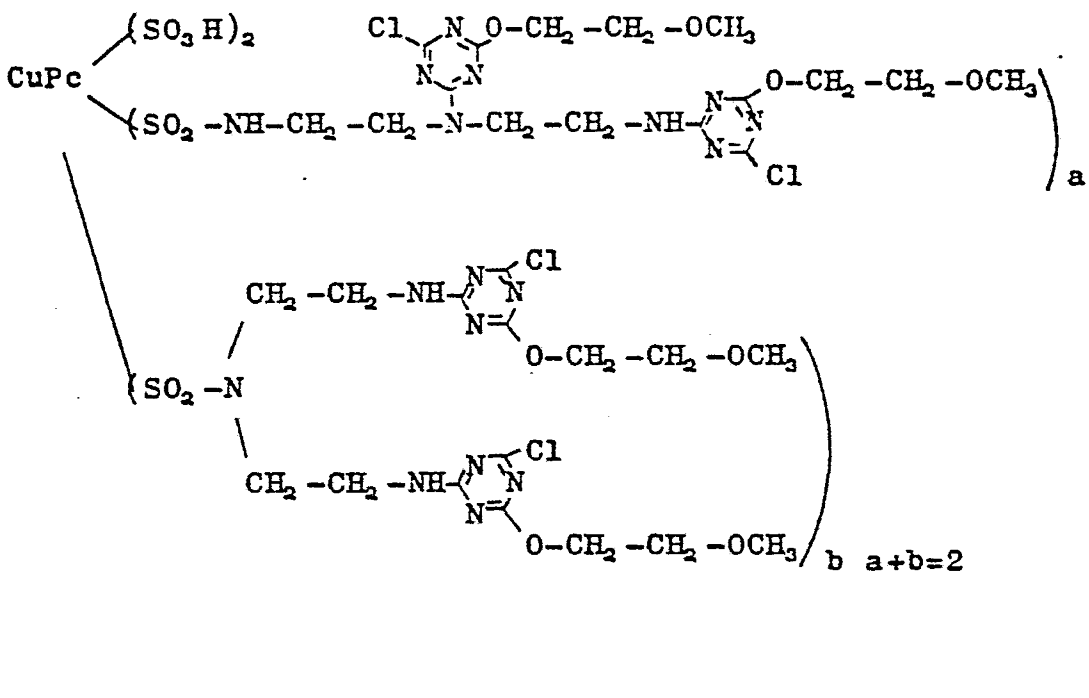

a+b=2

der Cellulose-Fasern nach einem der aufgeführten Anwen= dungsbeispiele in einem klaren Türkis mit hervorragenden Echtheiten anfärbt.

b) Den oben eingesetzten Farbstoff (A) erhält man wie folgt:

93,2 g Kupferphthalocyanin-disulfonsäure-disulfochlorid werden in eine neutralisierte Lösung von 103 g Diethylen= triamin in 500 ml $H_2O$ eingetragen. Man stellt mit Natron= lauge auf pH 9 und erwärmt auf 40 °C, wobei man den pH-Wert mit Natronlauge hält. Nach beendeter Reaktion wird mit halb-konz. HCl auf pH 5 gestellt und abgesaugt. Man wäscht mit 1 %iger HCl aus.

Beispiel 2

Verfährt man wie in Beispiel 1, ersetzt aber das Diethy= lentriamin durch eine äquivalente Menge eines der folgen= den Triamine, erhält man ebenfalls wertvolle Farbstoffe:

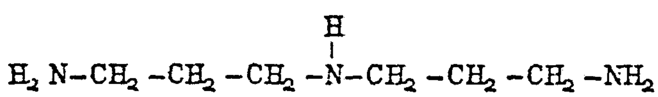

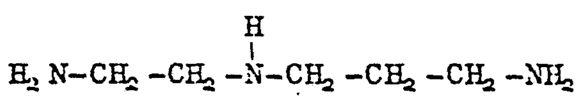

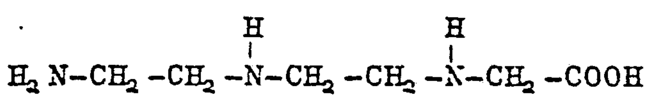

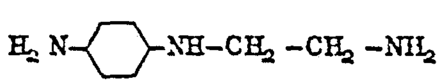

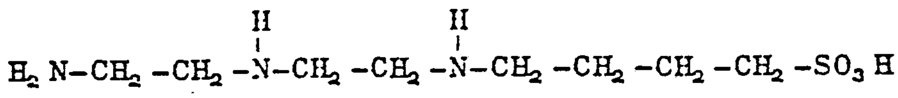

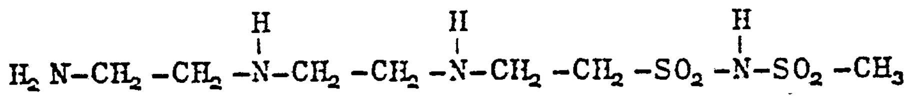

Beispiel 3

Verfährt man wie in den Beispielen 1 und 2, ersetzt aber das 2,4-Dichlor-6-methoxyethoxy-1,3,5-triazin durch äquivalente Mengen eines der folgenden Acylierungsmittel, werden ebenfalls wertvolle Reaktivfarbstoffe erhalten:

2,6-Dichlor-4-aminotriazin

2,6-Dichlor-4-(o-, m- oder p-sulfophenyl)-aminotriazin

2,6-Difluor-4-aminotriazin

2,6-Difluor-4-(o-, m- oder p-sulfophenyl)-aminotriazin

2,4,6-Trifluor-5-chlorpyrimidin

2,4,6-Trifluor-5-methylpyrimidin

2,3-Dichlorchinoxalin-6-carbonsäurechlorid oder -6-sulfon=säurechlorid

2-Chloracetylchlorid

2-Chlorethansulfochlorid

Beispiel 4

114 g des Farbstoffs der Formel

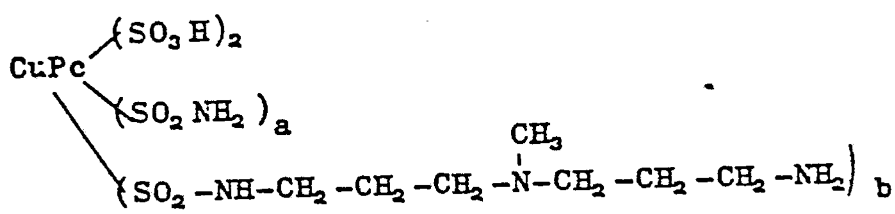

a+b=2

werden in 1,4 l $H_2O$ aufgeschlämmt. Man stellt auf pH 6,5 und versetzt bei 0 bis 5 °C mit einer Lösung von 64,5 g 2,6-Dichlor-4-(p-sulfophenoxy)-triazin in $H_2O$. Man er= wärmt auf 40 °C und hält den pH-Wert durch Zugabe von Sodalösung zwischen 6,5 und 7. Nach dem Aussalzen isoliert man den Farbstoff der Formel

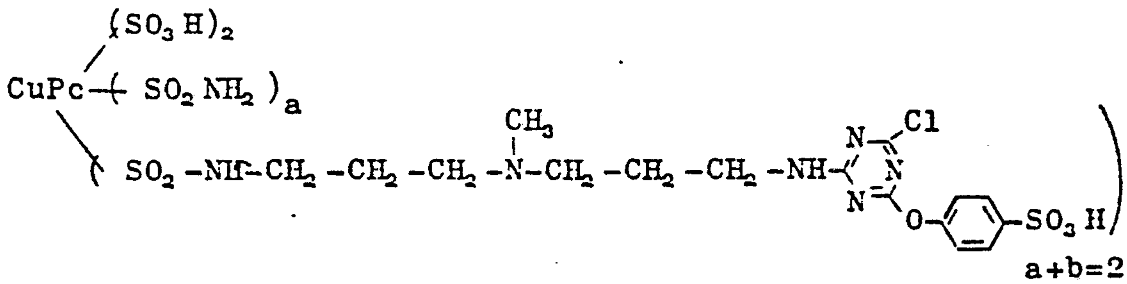

der Cellulose-Fasern nach einem der aufgeführten Anwen= dungsbeispiele in einem klaren Türkis mit vorzüglichen Echtheiten anfärbt.

Den oben eingesetzten Farbstoff erhält man wie folgt:

89,3 g Kupferphthalocyanin-disulfonsäure-disulfochlorid werden in 1,5 l Eiswasser eingetragen. Man versetzt mit 10,7 g $NH_4Cl$ und einer neutralisierten Lösung von 29 g Bis-(3-aminopropyl)-methylamin. Man stellt mit Natron= lauge einen pH-Wert von 9,5 ein. Man erwärmt auf 40 °C und hält den pH-Wert. Nach beendeter Reaktion stellt man neutral, salzt aus und isoliert den Farbstoff der wahr= scheinlichen Formel

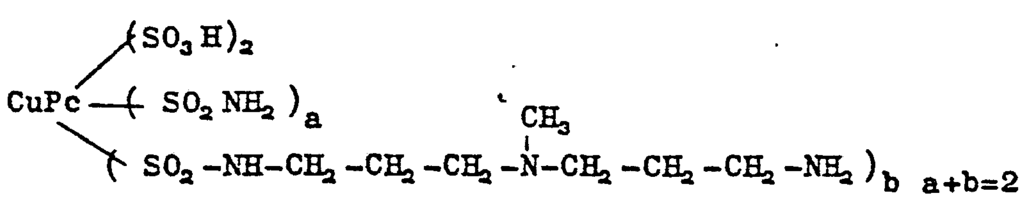

Beispiel 5

Verfährt man wie in Beispiel 4, ersetzt aber das Bis-(3-aminopropyl)-methylamin durch äquivalente Mengen eines der folgenden Triamine, erhält man ebenfalls wertvolle Farbstoffe:

$$CH_3-NH-CH_2-CH_2-N(CH_3)-CH_2-CH_2-NH-CH_3$$

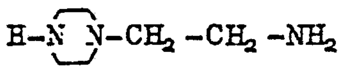
,

$$H_2N-CH_2-CH_2-N(CH_2-COOH)-CH_2-CH_2-NH-CH_2-COOH$$

$$H_2N-CH_2-CH_2-N(CH_2-COOH)-CH_2-CH_2-NH_2\ ,$$

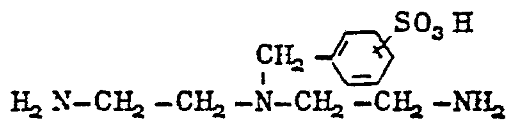

$$H_2N-CH_2-CH_2-N(CH_2-CH_2-SO_2NH-SO_2CH_3)-CH_2-CH_2-NH_2\ ,$$

$$H_2N-CH_2-CH_2-CH_2-N(CH_2-CH_2-CH_2-CH_2-SO_3H)-CH_2-CH_2-CH_2-NH_2\ ,$$

Beispiel 6

Verfährt man wie in den Beispielen 4 und 5 beschrieben, verwendet aber anstelle von 2,6-Dichlor-4-(p-sulfophen=oxy)-triazin äquivalente Mengen der folgenden Acylierungs=mittel, werden ebenfalls wertvolle Reaktivfarbstoffe erhalten:

2,6-Dichlor-4-methoxytriazin, 2,6-Dichlor-4-methylamino=triazin

2,6-Dichlor-4-o-, m oder p-carboxyphenylaminotriazin
2,6-Dichlor-4-methoxyethylaminotriazin, 2,6-Dichlor-4-β-sulfoethylaminotriazin
2,6-Dichlor-4-carboxymethylaminotriazin, 2,6-Dichlor-4-β-sulfoethylaminotriazin,
2,6-Difluor-4-phenylaminotriazin
2,6-Difluor-4-(4',8-disulfonaphthyl-(2'))-aminotriazin
2,6-Difluor-4-(2'-sulfo-4'-methoxyphenyl)-aminotriazin
Tetrachlorpyrimidin
α- und β-Bromacrylsäurechlorid
2,4-Difluor-5-chlor-6-methylpyrimidin

Beispiel 7

106,5 g des nach Beispiel 1b hergestellten Farbstoffes werden in 1 L $H_2O$ aufgeschlämmt. Man versetzt mit 18,9 g Chloressigsäure und stellt mit Natronlauge auf pH 11. Man erwärmt auf 70 °C und hält den pH-Wert. Nach beendeter Reaktion stellt man auf pH 6,5 und versetzt bei 0 °C mit einer Lösung von 58 g 2,6-Difluor-4-(m-sulfophenyl)-aminotriazin. Man erwärmt auf 30 °C und hält den pH-Wert mit Soda-Lösung. Man salzt aus durch Zugabe von NaCl und isoliert einen Farbstoff, der Cellulose-Fasern nach einem der aufgeführten Anwendungsbeispiele in einem brillanten Türkis mit hervorragenden Echtheiten färbt.

Beispiel 8

Verfährt man wie in Beispiel 7, verwendet aber anstelle von Chloressigsäure äquivalente Mengen der folgenden Alkylierungsmittel, werden ebenfalls wertvolle Reaktivfarbstoffe erhalten:

Bromessigsäure
2-Chlorpropionsäure
3-Brompropionsäure
2-Chlorbuttersäure
3- oder 4-Brom-buttersäure
2-Methyl-3-chlorpropionsäure
4-Chlorbutansulfonsäure
o-, m- oder p-Carboxybenzylchlorid- oder -bromid
o-, m- oder p-Sulfobenzylchlorid- oder -bromid
$Cl-CH_2-CH_2-SO_2-NH-SO_2-CH_3$
$Cl-CH_2-CH_2-CH_2-CH_2-SO_2-NH-SO_2-CH_3$
Methyljodid

Beispiel 9

Verfährt man wie in den Beispielen 7 und 8, verwendet aber anstelle von 2,6-Difluor-4-(p-sulfophenyl)-amino=triazin äquivalente Mengen der in den Beispielen 3 und 6 aufgeführten Acylierungsmittel, werden ebenfalls wert=volle Reaktivfarbstoffe erhalten.

Beispiel 10

20,6 g Diethylentriamin werden in 100 ml Wasser gelöst und mit 14,2 g Chloressigsäure versetzt. Man stellt mit Natron=lauge auf pH 11, erwärmt auf 60 °C und hält den pH-Wert mit Natronlauge. Man kühlt ab auf 0 °C, stellt mit Salz=säure auf pH 7, fügt 5,35 g $NH_4Cl$ zu und versetzt mit 95 g Kupferphthalocyanin-sulfonsäure-trisulfochlorid. Mit Natronlauge wird auf pH 9,6 gestellt. Man erwärmt auf 45 °C und hält pH 9,6. Man kühlt ab auf 0 °C, stellt auf

 

pH 6,4 und versetzt mit einer Lösung von 96 g 2,6-Dichlor-4-(p-sulfophenyl)-aminotriazin. Man erwärmt auf 40 °C und hält mit Sodalösung pH 6,4. Nach dem Aussalzen isoliert man einen Reaktivfarbstoff, der Cellulose-Fasern nach einem der aufgeführten Anwendungsbeispiele in einem Türkis mit hervorragenden Waschechtheiten anfärbt.

Beispiel 11

Verfährt man wie in Beispiel 10, verwendet aber anstelle von Diethylentriamin äquivalente Mengen der in Beispiel 2 genannten Triamine, werden ebenfalls wertvolle Reaktiv=farbstoffe erhalten.

Beispiel 12

Verfährt man wie in den Beispielen 10 und 11, verwendet aber anstelle von Chloressigsäure äquivalente Mengen der in Beispiel 8 aufgeführten Alkylierungsmittel, werden Reaktivfarbstoffe mit sehr guten Waschechtheiten erhalten.

Beispiel 13

Verfährt man wie in den Beispielen 10, 11 und 12, ver=wendet aber anstelle von 2,6-Dichlor-4-(p-sulfophenyl)-aminotriazin äquivalente Mengen der in den Beispielen 3 und 6 aufgeführten Acylierungsmittel, werden ebenfalls wertvolle Reaktivfarbstoffe erhalten.

Beispiel 14

Setzt man in den Beispielen 1 bis 13 anstelle der Kupfer=phthalocyanin-Verbindungen äquivalente Mengen der ent=sprechenden Nickelphthalocyanin-Verbindungen ein, erhält man ebenfalls wertvolle Reaktivfarbstoffe, die auf cellulosehaltigem Material nach einem der aufgeführten Anwendungsbeispiele kräftige, brillante Grüntöne von guten Allgemeinechtheiten liefern.

Anwendungsbeispiel 15

Druckvorschrift

30 g Farbstoff des Beispiels 1 werden in 339 ml Wasser und 200 g Harnstoff gelöst, in 400 g einer etwa 5 %igen Natriumalginatverdickung ausgetragen und mit 30 g Kalium=carbonat und 1 g Natriumhydroxyd von 36° Be versetzt. Mit der so erhaltenen Druckfarbe wird ein Baumwollgewebe wie üblich bedruckt und getrocknet. Dann dämpft man 8 Minuten bei 100 bis 101°, spült, seift, spült wieder und trocknet. Es resultiert ein klarer Türkis-Druck mit guter Naß- und Lichtechtheit.

Klotzvorschrift

30 Teiledes nach Beispiel 1 dargestellten Farbstoffes werden in 1000 Teilen Wasser gelöst. Mit dieser Lösung wird ein Baumwollgewebe fouladiert und bis zu einer Gewichtsabnahme von 90 % abgepreßt. Die noch feuchte Baumwolle wird bei 70° während 30 Minuten in einem Bad, welches in 100 Teilen Wasser 200 Teile kalziniertes

Natriumsulfat und 10 Teile kalziniertes Natriumcarbonat gelöst enthält, behandelt. Anschließend wird die Färbung in üblicher Weise fertiggestellt. Man erhält ein brillan=tes Türkis mit vorzüglichen Naß- und Lichtechtheiten.

Färbevorschrift

In einem Färbebecher von 300 ml Inhalt, der sich in einem beheizbaren Wasserbad befindet, werden 168 ml Wasser von 20 - 25° vorgelegt. Man teigt 0,3 g des nach Beispiel 7 erhaltenen Farbstoffes mit 2 ml kaltem Wasser gut an und fügt 30 ml heißes Wasser (70°) zu; dabei löst sich der Farbstoff auf. Die Farbstofflösung wird dem vorgelegten Wasser zugegeben und 10 g Baumwollgarn in dieser Färbe=flotte ständig in Bewegung gehalten. Innerhalb von 10 Minuten erhöht man die Temperatur der Färbeflotte auf 40 - 50°, setzt 10 g wasserfreies Natriumsulfat zu und färbt 30 Minuten weiter. Dann fügt man der Färbeflotte 4 g wasserfreies Natriumcarbonat zu und färbt 60 Minuten bei 40 - 50°. Man entnimmt dann das gefärbte Material der Färbeflotte, entfernt die anhaftende Flotte durch Auswringen oder Abpressen und spült das Material zunächst mit kaltem Wasser und dann mit heißem Wasser so lange, bis die Spülflotte nicht mehr angeblutet wird. Anschlie=ßend wird das gefärbte Material in 200 ml einer Flotte, die 0,2 g Natriumalkylsulfat enthält, erneut gespült und bei 60 - 70° in einem Trockenschrank getrocknet. Man erhält ein brillantes Türkis von hervorragenden Wasch- und Lichtechtheiten.

Patentansprüche:

1. Phthalocyanin-Reaktivfarbstoffe, die in Form der freien Säure der Formel

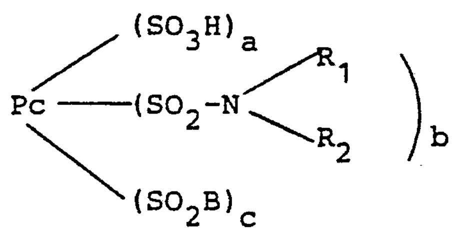

(I)

entsprechen, worin

Pc für den Rest eines Phthalocyanins steht,

$R_1$ und $R_2$ gleich oder verschieden sein können und für Wasserstoff gegebenenfalls substituiertes Alkyl, gegebenenfalls substituiertes Cycloalkyl, gegebenenfalls substituiertes Aralkyl oder gegebenenfalls substituiertes Aryl stehen können

oder worin

$R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest bilden,

worin

a = Zahl von 0 bis 3,

b = Zahl von 0 bis 3,

c = Zahl von 1 bis 4,

wobei $(a + b + c) \leq 4$,

B = Rest der Formeln II und/oder III

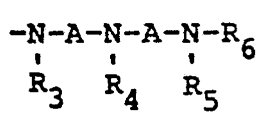

II

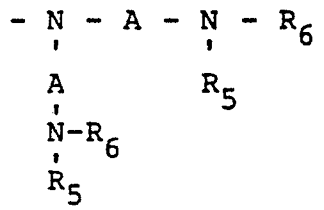

III

worin die Reste A gleich oder verschieden sein können und
für gegebenenfalls substituiertes geradkettiges Alkylen mit mindestens 2 C-Atomen
für gegebenenfalls substituiertes verzweigtes Alkylen mit mindestens 3 C-Atomen
oder für gegebenenfalls substituiertes Cycloalkylen mit mindestens 5 C-Atomen stehen,
und worin

$R_3$ = Wasserstoff, gegebenenfalls substituiertes Alkyl, gegebenenfalls substituiertes Aralkyl

$R_4$ = gegebenenfalls substituiertes Alkyl, gegebenenfalls substituiertes Aralkyl oder Z, wobei Z für den Rest einer Reaktivgruppe steht, oder Q, wobei Q für den Rest der Formel

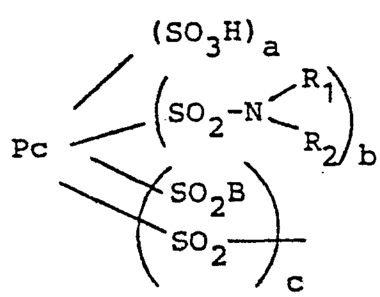

steht, in der Pc,a,b,c,$R_1$,$R_2$ und B die angegebene Bedeutung haben

$R_5$ = Wasserstoff, gegebenenfalls substituiertes Alkyl, gegebenenfalls substituiertes Aralkyl oder Z, wobei Z die angegebene Bedeutung hat, oder Q, wobei Q die angegebene Bedeutung hat

$R_6$ = Wasserstoff, gegebenenfalls substituiertes Alkyl, gegebenenfalls substituiertes Aralkyl

oder worin

$R_3$ und $R_4$ oder $R_4$ und $R_6$ jeweils zusammen einen gegebenenfalls substituierten Alkylenrest mit mindestens 2 C-Atomen bilden, wobei die Reaktivfarbstoffe der Formel I

a) mindestens einen Rest Z enthalten und

b) die Gruppierung 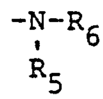 in Formel III nicht für $-NH_2$ oder 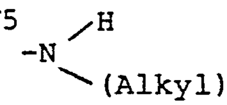 stehen darf.

2. Phthalocyanin-Reaktivfarbstoffe, die in Form der freien Säure der Formel

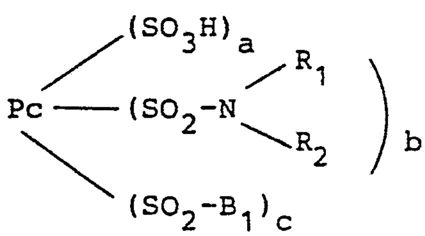 (IV)

entsprechen,

worin Pc, $R_1$, $R_2$, a, b und c die in Anspruch 1 angegebene Bedeutung haben und $B_1$ für die Reste der Formeln Va und/oder Vb steht

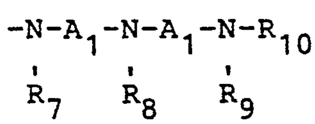

Va

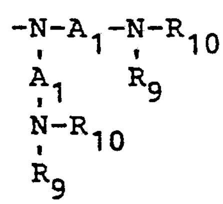 Vb

worin $A_1 = -CH_2-CH_2-$, $-CH_2-CH_2-CH_2-$
$R_7$ = H, Carboxymethyl,
$R_8$ = Carboxymethyl, Z
wobei Z die angegebene Bedeutung hat
$R_9$ und $R_{10}$ = H, Carboxymethyl,
$R_9$ = darüber hinaus Z
wobei Z die angegebene Bedeutung hat,
der Rest

$-N-R_{10}$
$\ \ R_9$

in den Formeln Va und Vb nicht $-N-H$ (N–H) oder

$-N-CH_2-COOH$ (N–H) sein darf und mindestens

einer der Reste $R_8$ oder $R_9$ für Z steht.

3. Phthalocyanin-Reaktivfarbstoffe, die in Form der freien Säure der Formel

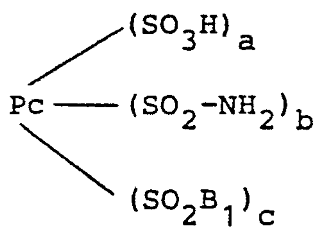

VI

entsprechen,
worin Pc, a, b, c und $B_1$ die in Anspruch 2 angegebene Bedeutung besitzen.

4. Phthalocyanin-Reaktivfarbstoffe, die in Form der freien Säure der Formel

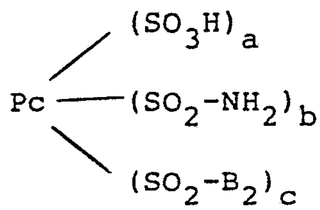

VII

entsprechen, worin Pc, a, b und c die in Anspruch 1 angegebene Bedeutung haben und $B_2$ für die Reste der Formeln VIIIa und/oder VIIIb steht

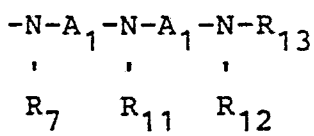

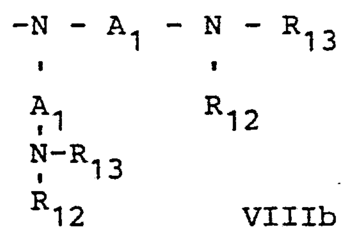

VIIIa VIIIb

worin $A_1$ und $R_7$ die angegebene Bedeutung haben
$R_{11}$, $R_{12}$ = $Z_1$ wobei
$Z_1$ = Rest eines Mono- oder Dihalogen-triazins,
$R_{11}$= darüber hinaus auch Carboxymethyl,
$R_{13}$ = Carboxymethyl oder Wasserstoff
wobei 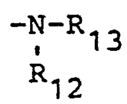 nicht 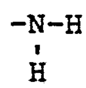 oder 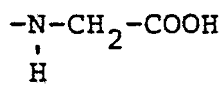 sein kann

und mindestens einer der Reste $R_{11}$ oder $R_{12}$ für $Z_1$ steht.

5. Verfahren zur Herstellung von Phthalocyanin-Reaktivfarbstoffen der Formel (I) gemäß Anspruch 1,

dadurch gekennzeichnet, daß man ein Phthalocyanin der Formel

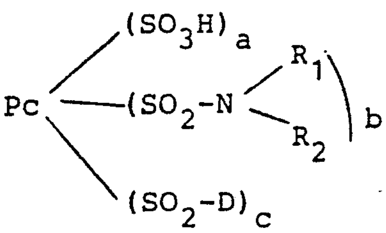

(IX)

worin Pc, a, b, c, $R_1$ und $R_2$ die in Anspruch 1 angegebene Bedeutung haben und D für die Reste der Formeln

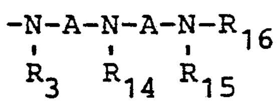

(Xa)

und/oder

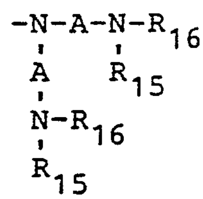

(Xb)

steht, worin

$R_3$ und A die in Anspruch 1 angegebene Bedeutung haben und

$R_{14}$, $R_{15}$, $R_{16}$= unabhängig voneinander Wasserstoff, gegebenenfalls substituierter Alkyl- oder Aralkylrest, der vorzugsweise durch eine wasserlöslichmachende Gruppe substituiert ist, oder wobei $R_3$ und $R_{14}$ oder $R_{14}$ und $R_{15}$ einen Alkylenrest mit mindestens 2 C-Atomen bilden, wobei mindestens einer der Reste $R_{14}$, $R_{15}$ und $R_{16}$ Wasserstoff ist,

mit der bis zu 2 c-molaren Menge einer Acylierungsmittels der Formel

L - Z (XI)

umsetzt, worin Z für einen Reaktivrest und L für eine anionisch abspaltbare Gruppe steht.

6. Verwendung der Phthalocyanin-Reaktivfarbstoffe der Ansprüche 1-4 zum Färben und Bedrucken von Hydroxylgruppen-und/oder stickstoffhaltigen Materialien.